# EUROPÄISCHE PATENTSCHRIFT

(11) **EP 4 143 450 B1**
(45) Veröffentlichungstag und Bekanntmachung des Hinweises auf die Patenterteilung: **31.01.2024**
(21) Anmeldenummer: 21720513.7
(22) Anmeldetag: 26.04.2021
(51) Int. Cl.: F16C 19/38, F16C 33/66, F16C 33/78, F03D 80/70

(54) **ROTORLAGER FÜR EINE WINDENERGIEANLAGE UND WINDENERGIEANLAGE**
ROTOR BEARING FOR A WIND TURBINE, AND WIND TURBINE
PALIER DE ROTOR POUR UNE ÉOLIENNE, ET ÉOLIENNE

(30) Priorität: 28.04.2020 DE 102020205370; 28.04.2020 BE 202005280
(43) Veröffentlichungstag der Anmeldung: 08.03.2023
(73) Patentinhaber: thyssenkrupp rothe erde Germany GmbH, 44137 Dortmund (DE); thyssenkrupp AG, 45143 Essen (DE)
(72) Erfinder: CAMPE, Björn, 59510 Lippetal-Schoneberg (DE); ELFERT, Gunther, 59597 Erwitte (DE); ROLLMANN, Jörg, 59558 Lippstadt (DE); LÜNEBURG, Bernd, 45481 Mülheim (DE); FRONING, Stephan, 58239 Schwerte (DE); SANTORO, Simone Angelo, 59555 Lippstadt (DE); SHARYPKIN, Yevgenij, 59556 Lippstadt - Bad Waldliesborn (DE)
(74) Vertreter: thyssenkrupp Intellectual Property GmbH
(86) Internationale Anmeldenummer: PCT/EP2021/060772
(87) Internationale Veröffentlichungsnummer: WO 2021/219524

(56) Entgegenhaltungen:
- EP-A1- 2 385 248
- EP-A1- 3 388 667
- DE-A1-102010 051 424
- US-A1- 2012 141 270

## Beschreibung

### Stand der Technik

Die Erfindung betrifft ein Rotorlager für eine Windenergieanlage nach dem Oberbegriff des Anspruchs 1 sowie eine Windenergieanlage nach dem Oberbegriff des Anspruchs 9.

Rotorlager von Windenergieanlagen dienen dazu, die Kräfte und Momente der drehenden Rotornabe in den Turm und in das Fundament der Windenergieanlage abzuleiten und gleichzeitig eine Drehmomentübertragung in den Antriebsstrang zum Generator hin zu ermöglichen. Das Rotorlager kann dabei als ein Momentenlager oder als mehrere verteilte Lager - beispielsweise als angestellte Kegelrollenlager oder Fest-Los-Lager - ausgebildet sein. Als Rotorlager werden meist Wälzlager mit zumindest einem Innenring und einem Außenring eingesetzt, die eine Rotation des Rotors gegenüber der Gondel ermöglichen, indem eines dieser Bauteile mit dem Außenring und das andere mit dem Innenring kraftschlüssig verbunden ist. Fett-, öl- oder anderweitig geschmierte Wälzkörper zwischen Innen- und Außenring ermöglichen die Rotationsbewegung.

Aufgrund der hohen von der Rotornabe zu übertragenden Kräfte und Momente ist es bei den vorgenannten Lagerungen konstruktionsbedingt vorteilhaft, wenn der Außenring mit der drehenden Rotornabe verbunden ist und der feststehende Innenring mit dem Maschinenhaus - der Gondel - verbunden ist. Derartige Lagerungen werden in der Regel als fettgeschmierte Rotorlager ausgeführt, da fettgeschmierte Lager weniger zu Leckage neigen sowie einen geringeren Wartungsaufwand erfordern. Für Ölschmierungen konnte gerade bei außenlaufenden Rotorlagern, bislang keine zufriedenstellende Abdichtung erzielt werden. Vorteile einer Ölschmierung bestehen zum einen darin, dass das Öl bei einer Umlaufschmierung gefiltert werden kann, so dass Überrollungen von im Schmierstoff befindlichen Partikeln reduziert werden, und zum anderen in der Möglichkeit einer aktiven Temperierung des Öls, so dass die Temperatur des Lagers besser eingestellt und gegebenenfalls auf andere, zusätzliche Kühl-/Heizsysteme verzichtet werden kann.

Aus DE 10 2017 107 553 A1 zur Lagerung des Rotors einer Windenergieanlage ein Kegelrollenlager mit einem Innenring, einem Außenring und zwei Reihen von Kegelrollen, die in einer O-Anordnung zwischen dem Innenring und dem Außenring angeordnet sind, bekannt. Der Spalt zwischen Innenring und Außenring ist zumindest an einer Seite des Kegelrollenlagers durch eine Dichtungsanordnung abgedichtet, die eine drehfest an den Innenring angeschlossene Hauptdichtung sowie einen an den Außenring drehfest angeschlossenen Dichtungslaufring umfasst, wobei der Dichtungslaufring eine Dichtungslauffläche für die Hauptdichtung bildet. Ferner trägt der Klemmring, mit dem die Hauptdichtung gehalten ist eine Staubschutzdichtung, welche die Hauptdichtung vor Verschmutzungen von außen schützt. Nachteilig an einer solchen Dichtungsanordnung ist, dass sich bei einer Ölschmierung des Lagers und insbesondere unter Belastung mit einer stehenden Ölsäule, ein Ölaustritt durch beide Dichtungen hindurch nicht sicher vermeiden lässt.

Zur Verbesserung der Dichtigkeit wurde in WO 2012/136632 A1 ein ölgeschmiertes Wälzlager zur Lagerung des Rotors einer Windkraftanlage vorgeschlagen, das eine Wellendichtung, die einen Wälzkörper aufnehmenden Lagerinnenraum von einer Lageraußenseite trennt, und eine Klemmanordnung zur axialen Fixierung der Wellendichtung aufweist, die einen Abfluss für Öl aufweist. Dadurch kann durch die Wellendichtung hindurchgetretenes Schmieröl abgeführt werden, bevor es durch die ebenfalls vorgesehenen Staubschutzdichtungen nach Außen tritt. Nachteilig ist jedoch, dass bei dem Lager die Füllhöhe des Schmieröls im Lager aufwendig eingestellt werden muss, um insbesondere eine Überspeisung des Lagers mit Schmieröl, welche zu verschlechterten Laufeigenschaften und einer erhöhten Menge an Leckageöl führt, zu vermeiden.

EP 2 385 248 A1 beschreibt ein Lager für eine Windturbine mit einem stehenden Innenring, einem Außenring, der um den Innenring herum beweglich ist, und geschmierten Rollen die zwischen dem Innenring und dem Außenring angeordnet sind, wobei das Lager ein Mittel zum Ablassen von Öl aus dem oberen Bereich des stehenden Innenrings aufweist.

US 2012/0141270 A1 beschreibt einen Antriebsstrang für eine Windkraftanlage und ein Verfahren zur Schmierung eines Lagers in einem Antriebsstrang einer Windkraftanlage. Der Antriebsstrang umfasst eine drehbare Komponente und ein Lager, das die drehbare Komponente umgibt. Der Antriebsstrang umfasst ferner einen Schmierkanal, der in Fluidverbindung mit dem Lager steht, um dieses mit Schmierfluid zu versorgen, und einen Abflusskanal, der in Fluidverbindung mit dem Lager steht, um Schmierfluid aus diesem zu entfernen.

DE 10 2010 051 424 A1 betrifft ein Wälzlager, umfassend einen ersten Lagerring, einen zweiten Lagerring, sowie eine Vielzahl von Wälzkörpern, die in mindestens einer Lagerreihe zwischen dem ersten und dem zweiten Lagerring um eine Lagerachse abwälzen, wobei ein Lagerring mindestens eine Schmierbohrung aufweist. Ein Schmierstoffsammelbehälter dient der Aufnahme des verbrauchten Schmierstoffes und verhindert ein unkontrolliertes Austreten beim Nachschmieren.

EP 3 388 667 A1 beschreibt ein Rotorlager für eine Windenergieanlage nach dem Oberbegriff des Anspruchs 1, sowie eine Windenergieanlage nach dem Oberbegriff des Anspruchs 9. In dem aus EP 3 388 667 A1 bekannten Schmiersystem für einen Antriebsstrang einer Windturbine kann das Ölreservoir einen stetigen Fluss von Schmierflüssigkeit bereitstellen, um sicherzustellen, dass die Lager der Hauptwellenanordnung gut geschmiert sind. Das vordere Hauptlager der Hauptwellenanordnung umfasst Labyrinthdichtungen an gegenüberliegenden Enden in axialer Richtung, die so ausgelegt sind, dass sie Schmierflüssigkeit zurückhalten und eine vordere Lagerölkammer bilden, die einen ersten Teil des Ölsumpfes der Hauptwelle enthält.

### Offenbarung der Erfindung

Aufgabe der Erfindung ist es daher, ein Rotorlager für eine Windenergieanlage und eine Windenergieanlage mit einem Rotorlager anzugeben, bei denen die Abdichtung eines ölgeschmierten Lagerinnenraums verbessert und zugleich die dauerhafte Versorgung des Lagerinnenraums mit einer festgelegten Schmierölmenge vereinfacht ist.

Diese Aufgabe wird gelöst durch ein Rotorlager für eine Windenergieanlage mit den Merkmalen des Anspruchs 1 und eine Windenergieanlage mit den Merkmalen des Anspruchs 9.

Hierdurch wird ein Rotorlager für eine Windenergieanlage geschaffen mit einem Innenring und einem Außenring, die relativ zueinander verdrehbar sind und einen Lagerinnenraum begrenzen, in dem mindestens eine Reihe von zwischen den Lagerringen abrollbaren Wälzkörpern angeordnet ist, und mit einem Abfluss zur Abführung von aus dem Lagerinnenraum austretendem Schmieröl. Erfindungsgemäß ist vorgesehen, dass der Lagerinnenraum zu dem Abfluss hin offen ausgebildet ist, so dass Schmieröl aus dem Lagerinnenraum drucklos über den Abfluss abführbar ist. Die offene Ausbildung des Lagerinnenraums hin zu einem Abfluss sorgt dafür, dass eine Überspeisung des Rotorlagers mit Schmieröl auch bei Ausfall von Überwachungseinrichtungen praktisch ausgeschlossen wird. Überschüssiges Schmieröl wird drucklos über den Überlauf und den Abfluss aus dem Lagerinnenraum abgeführt. Gleichzeitig ist durch die offene Bauweise eine Belüftung des Rotorlagers sichergestellt.

Erfindungsgemäß ist der Lagerinnenraum mit dem Abfluss über mindestens einen an dem Außenring drehfest angeschlossenen Überlauf fluidisch verbunden, der in Einbaulage des Rotorlagers eine Füllhöhe mindestens eines im Lagerinnenraum ausgebildeten Ölsumpfes festlegt. Die geodätische Höhe des Überlaufs legt in Einbaulage des Rotorlagers eine maximale Füllhöhe mindestens eines im Lagerinnenraum ausgebildeten Ölsumpfes fest. Hierdurch wird ein sicherer Betrieb und eine hohe Dichtigkeit des Rotorlagers unabhängig von der zugeführten Schmierölmenge und in allen Betriebszuständen - wie beispielsweise nicht ausgeglichenen Zuständen - erreicht, ohne dass eine spezielle Mess- oder Regeleinrichtung für das Ölsystem benötigt wird.

Die Verwendung eines Überlaufs zum Abfluss hin, hat den zusätzlichen Vorteil, dass ein Ölsumpf ausgebildet wird, ohne dass sich Schmieröl an einer Dichtung aufstaut. Der Ölsumpf verleiht dem ölgeschmierten Rotorlager vorteilhafte Notlaufeigenschaften im Falle eines Ausfalls der Schmiermittelversorgung. Die Dichtungen in dem erfindungsgemäßen Rotorlager werden somit nur durch Spritzöl und nicht durch eine stehende Ölsäule belastet, wodurch die Dichtigkeit des Lagers verbessert ist.

Bevorzugt ist an den Abfluss eine Ölaufbereitungseinheit und ein Tank angeschlossen, aus dem das Schmieröl über eine Pumpe wieder dem Lagerinnenraum zugeführt werden kann. Die Ölaufbereitungseinheit umfasst vorzugsweise einen Filter und/oder eine Temperierungsvorrichtung zur aktiven Temperierung des Lagerinnenraums. Auf diese Weise kann das Schmieröl gefiltert und Überrollungen von Partikeln vermieden werden. Weiterhin kann beispielsweise über eine aktive Ölkühlung die Temperatur des Lagers besser eingestellt und gegebenenfalls auf andere, beispielsweise wasser- oder luftbasierte, Kühlsysteme verzichtet werden. Auch eine Ölheizung für den Anlauf der Windenergieanlage bei niedrigen Umgebungstemperaturen ist denkbar. Ferner ist ein Condition Monitoring, beispielsweise durch Überwachung der Temperatur und Partikel - auch remote - möglich.

In bevorzugten Ausführungsformen ist das Rotorlager als doppelreihiges Kegelrollenlager oder als Axial-Radial-Rollenlager ausgebildet. Dabei ist einer der Lagerringe als sogenannter Nasenring ausgebildet, der von einem mehrteilig ausgebildeten zweiten Lagerring teilweise umgriffen wird unter Einschluss mehrerer Wälzkörperreihen zwischen den Lagerringen. Diese Lagerbauformen erlauben in hohem Maße die Aufnahme von radialen und axialen Kräften sowie von Kippmomenten, wie sie an Rotorlagern von Windenergieanlagen auftreten.

Erfindungsgemäß ist der Außenring des Rotorlagers als Nasenring ausgebildet, an dem mindestens zwei Laufbahnen für zwischen den Lagerringen abrollbare Wälzkörperreihen ausgebildet sind und an dem beidseitig jeweils ein Ölfangring drehfest angeschlossen ist. Die Ölfangringe erstrecken sich für die Ausbildung jeweils eines Ölsumpfes randseitig über radial äußere Ränder der Laufbahnen hinaus in radialer Richtung nach innen. Die Ölfangringe können einstückig mit dem Außenring ausgebildet, oder als einer oder mehrere Zusatzringe an diesem fixiert sein. Die Ölfangringe verbreitern vorzugsweise den Außenring und stellen eine wannenförmige Aufnahme für Schmieröl bereit. Dazu weisen die Ölfangringe bevorzugt einen sich im Wesentlichen axial erstreckenden Abschnitt und einen sich im Wesentlichen radial erstreckenden, randseitigen Abschnitt auf. Durch die randseitige Erstreckung der Ölfangringe radial nach innen wird ein Rückstau von Schmieröl bis in den Bereich der Laufbahnen erzielt. Die Wälzkörper tauchen so bei jedem Umlauf in den Ölsumpf zumindest teilweise ein und verteilen das Schmieröl beim weiteren Umlauf im Lagerinnenraum. Die Ölschmierung und Rückführung des Öls erfolgen demnach erfindungsgemäß so, dass auch bei Ausfall der Energieversorgung bzw. der Pumpen keine Leckage aus dem Lager austritt, die Rückführung überschüssigen Öls, beispielsweise in einen Tank, weiterhin erfolgt und der Weiterbetrieb des Lagers zumindest für einen begrenzten Zeitraum möglich ist.

Erfindungsgemäß bildet zumindest einer der Ölfangringe den mindestens einen Überlauf. Das Schmieröl wird dann an der Innenseite des Ölfangrings im Ölsumpf aufgestaut und läuft an dessen Außenseite zum Abfluss hin ab.

Besonders bevorzugt sind die beiden Ölsümpfe über mindestens einen den Außenring durchquerenden Kanal miteinander verbunden. Ein solcher Kanal erlaubt den Austausch von Schmieröl zwischen den beiden Ölsümpfen. Bei einer Einbausituation des Lagers mit stehendem Außenring kann bereits ein den Außenring durchquerender Kanal ausreichen um einen Ausgleich der Füllhöhen beider Ölsümpfe im Betrieb zu schaffen.

Bei einer Auslegung des Rotorlagers als Außenläufer ist bevorzugt eine Mehrzahl von den Außenring durchquerenden Kanälen zur Verbindung der beiden Ölsümpfe über den Umfang des Außenrings verteilt angeordnet. Beim Umlauf des Außenrings tauchen die Kanäle nacheinander in den Bereich der Ölsümpfe ein. Jeder Kanal verbindet für die Dauer des Eintauchens die beiden Ölsümpfe miteinander zum Ausgleich von deren Füllhöhen. Nach dem Verlassen der Ölsümpfe leeren sich die Kanäle wieder, bevorzugt in Richtung ihres tieferliegenden Endes.

Rotorlager können mit einer Neigung zur Horizontalen eingebaut werden, um die Rotorblätter bei ihrem Umlauf weiter von dem Turm der Windenergieanlage zu entfernen und Berührungen zwischen Blatt und Turm auch bei hohen Belastungen auszuschließen. Diese Neigung der Rotorlagerachse kann vorteilhaft genutzt werden, um das Öl zur Generatorseite hin zu fördern und dort abzuführen.

Die Ölzuführung erfolgt bei einer Auslegung des Rotorlagers als Außenläufer bevorzugt mittels in den stehenden Innenring eingebrachter Bohrungen oder Düsen.

Die Verbindung der Ölsümpfe beidseits des Rotorlagers erlaubt Bauformen des Rotorlagers, die nur generatorseitige Schmieröl- und beidseitige Drainageanschlüsse besitzt. Dadurch kann auf einen Großteil der Leitungsführungen und Pumpen von der Nabenseite/Rotorseite verzichtet werden. Die Risiken möglicher Leckagen, Pumpenausfälle und Reparaturen werden reduziert. Besonders vorteilhaft ist eine Lösung, die nur generatorseitige Schmieröl- und Drainageanschlüsse besitzt, wodurch vollständig auf Leitungsführungen und Pumpen auf der Nabenseite verzichtet werden kann.

In bevorzugten Ausführungsformen weist das Rotorlager nur einseitig einen Überlauf auf und der Lagerinnenraum ist auf der anderen Seite des Rotorlagers mittels mindestens einer Dichtung geschlossen. Durch die Verbindung der beiden Ölsümpfe mittels mindestens eines Kanals kann ein Ausgleich von deren Füllhöhen erreicht werden. Ein einseitiger Überlauf kann somit genügen, um eine gemeinsame Füllhöhe für beide Ölsümpfe festzulegen. So kann eine stehende Ölsäule an der Dichtung des Lagerinnenraum auch auf der Seite vermieden werden, an der kein Überlauf vorgesehen ist.

Bevorzugt ist die Dichtung in Einbaulage des Rotorlagers oberhalb der durch den Überlauf festgelegten Füllhöhe der miteinander verbundenen Ölsümpfe angeordnet. Der Lauf der Dichtung wird für gewöhnlich durch Spritzöl ausreichend geschmiert. Eine solchermaßen belastungsfreie Dichtung weist eine hohe Dichtigkeit auf, so dass Leckagen nur in sehr geringem Umfang zu erwarten sind. Die Dichtung wird vorzugsweise auf der Rotorseite des Lagers eingesetzt, da die Anschlüsse für die Ölabführung vorzugsweise auf der Generatorseite angebracht werden. Ein weiterer Vorteil dieser Anordnung ist durch eine durch die Neigung des Antriebsstrangs bedingte Vorzugsrichtung des Ölflusses zum Generator hin gegeben.

Denkbar ist aber auch, dass einer der Überläufe mit dem Abfluss über mindestens einen den Außenring durchquerenden Kanal verbunden ist. Auf diese Weise lässt sich insbesondere ein Rotorlager realisieren, bei dem beidseitig ein Überlauf, aber nur einseitig ein Abfluss vorgesehen ist. Über einen beispielsweise rotorseitigen Überlauf ausgetretenes Schmieröl kann so durch den Kanal im Außenring zu einem Abfluss auf der Seite der Gondel zurückgeführt werden.

Erfindungsgemäß ist an dem Innenring ein Ringaufsatz befestigt, der den den Überlauf bildenden Ölfangring in radialer Richtung umgreift und den Abfluss enthält, wobei der Ringaufsatz gegenüber dem Ölfangring abgedichtet ist. Diese Ausführungsform ist für Rotorlager bevorzugt, die als Außenläufer ausgelegt sind. Der Abfluss wird so über den Ringaufsatz ortsfest an dem stehenden Innenring befestigt.

Vorzugsweise ist der Innenring gegenüber dem Außenring beidseits des Lagers direkt oder indirekt durch jeweils ein Dichtungssystem abgedichtet, das mindestens zwei Dichtungen umfasst, zwischen denen jeweils eine Drainagekammer zum Sammeln von Leckageöl ausgebildet ist. Durch die Ausbildung eines mehrstufigen Dichtungssystems auf beiden Seiten des Lagers wird die im Betrieb aus dem Lager austretende Menge an Schmieröl weiter reduziert.

Zusätzlich kann vorgesehen sein, dass die Drainagekammern beidseits des Rotorlagers über mindestens einen den Außenring durchquerenden Kanal miteinander verbunden sind. Auf diese Weise kann das beidseits des Lagers ausgetretene Leckageöl einseitig abgeführt werden. Die dadurch ermöglichte kontinuierliche Leerung beider Drainagekammern im Betrieb verringert die Belastung der jeweils zweiten Dichtung. Die Dichtigkeit des Lagers wird somit erhöht und die Wartungsintervalle verlängert.

Alternativ oder zusätzlich können die Drainagekammern in einem unteren Umfangsbereich mit einem Ölsammelbehälter ausgestattet sein, der das anfallende Leckage-Öl auffängt. Aufgrund der geringfügigen verbleibenden Leckagemengen, sind bereits kleine Sammelbehälter geeignet die Leckage über einen langen Zeitraum aufzufangen und zwischenzuspeichern. Die Ölsammelbehälter können entweder bei regulären Wartungsarbeiten manuell oder beispielsweise über füllstandsgeregelte Pumpen geleert und das Lager mit einer entsprechenden Menge Öl nachgeschmiert werden.

Die Aufgabe wird ferner gelöst durch eine Windenergieanlage mit einem Turm, einer an dem Turm befestigten Gondel und einem an der Gondel drehbar gelagerten Rotor, wobei der Rotor über das zuvor beschriebene Rotorlager an der Gondel gelagert ist. Der Rotor ist dabei bevorzugt mit dem Außenring und die Gondel mit dem Innenring des Rotorlagers drehfest verbunden. Die Drehachse des Rotorlagers schließt gemäß einer bevorzugten Ausführungsform mit der Horizontalen einen Winkel im Bereich von 2° bis 10° ein, was den Durchfluss von Schmieröl durch einen den Außenring durchquerenden Kanal fördert.

Weitere vorteilhafte Ausführungsformen sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

### Kurzbeschreibung der Zeichnungen

- Fig. 1: zeigt schematisch eine erfindungsgemäße Windenergieanlage mit einem über ein erfindungsgemäßes Rotorlager gelagerten Rotor,
- Fig. 2: zeigt schematisch ein erstes Ausführungsbeispiel des erfindungsgemäßen Rotorlagers in einer geschnittenen Darstellung mit einem Ölüberlauf und mehreren die beidseitigen Ölsümpfe des Rotorlagers verbindenden Kanäle im Außenring,
- Fig. 3: zeigt schematisch eine Detaildarstellung des Rotorlagers nach Fig. 2,
- Fig. 4: zeigt schematisch eine Detaildarstellung eines zweiten Ausführungsbeispiels des erfindungsgemäßen Rotorlagers, bei dem sowohl die beidseitigen Ölsümpfe als auch die beidseitigen Drainagekammern der Dichtungssysteme miteinander mittels den Außenring durchquerender Kanäle verbunden sind.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

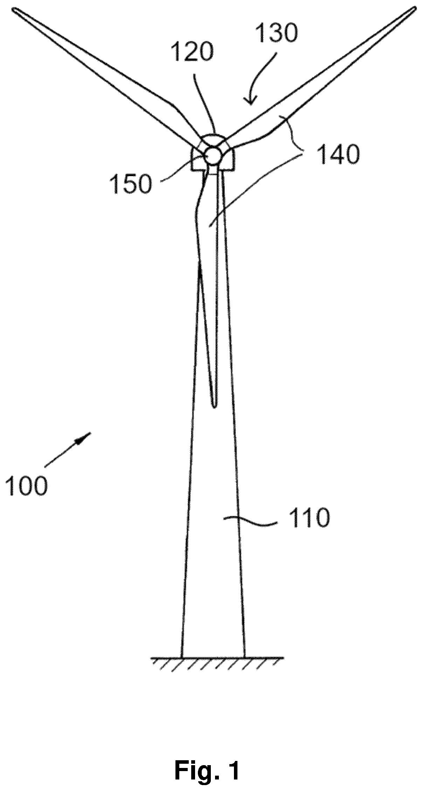

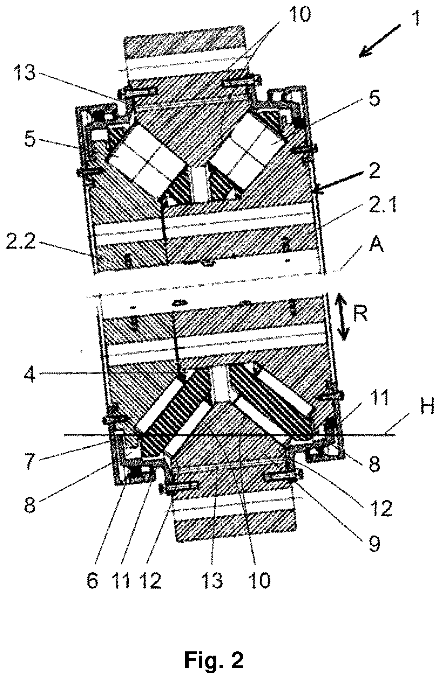

In **Fig. 1** ist eine Windenergieanlage 100 gemäß der Erfindung dargestellt. Die Windenergieanlage 100 umfasst einen Turm 110, eine an dem Turm 110 befestigte Gondel 120 und einen an der Gondel 120 drehbar gelagerten Rotor 130. Der Rotor 130 ist über ein erfindungsgemäßes Rotorlager 1 (vgl. Fig. 2 bis 4) an der Gondel 120 gelagert. Dabei ist bevorzugt der Rotor 130 mit dem Außenring 3 und die Gondel 120 mit dem Innenring 2 drehfest verbunden. Der Rotor 130 umfasst eine Rotornabe 120 und mehrere an der Rotornabe 120 befestigte Rotorblätter 140. Die an den Rotorblättern 140 angreifenden Windkräfte und die Schwerkraft können so über die Rotornabe 120 in den Außenring 3 des Rotorlagers 1 eingeleitet und über die Wälzkörperreihen 5 auf den Innenring 2 und die Gondel 120 übertragen werden.

In **Fig. 2** ist ein erstes Ausführungsbeispiel des erfindungsgemäßen Rotorlagers 1 für eine Windenergieanlage dargestellt. Das Rotorlager 1 umfasst einen Innenring 2 und einem Au-βenring 3, die relativ zueinander verdrehbar sind und einen Lagerinnenraum 4 begrenzen. In dem Lagerinnenraum 4 sind hier beispielhaft zwei Reihen von zwischen den Lagerringen 2, 3 abrollbaren Wälzkörpern 5 angeordnet. Das Rotorlager umfasst ferner einen Abfluss 6 zur Abführung von aus dem Lagerinnenraum 4 austretendem Schmieröl. Der Lagerinnenraum 4 ist zu dem Abfluss 6 hin offen ausgebildet, so dass Schmieröl aus dem Lagerinnenraum 4 drucklos über den Abfluss 6 abführbar ist. Der Lagerinnenraum 4 ist mit dem Abfluss 6 über einen an dem Außenring 3 drehfest angeschlossenen Überlauf 7 fluidisch verbunden. In der dargestellten Einbaulage des Rotorlagers 1 legt der Überlauf 7 eine Füllhöhe H des im Lagerinnenraum 4 ausgebildeten Ölsumpfes 8 fest.

Bei dem dargestellten Ausführungsbeispiel sind als Wälzkörperreihen 5 zwei Reihen von Kegelrollen vorgesehen, die in einer O-Anordnung zwischen dem Innenring 2 und dem Außenring 3 angeordnet sind. Der Innenring 2 ist aus zwei zueinander abgedichteten Teilringen 2.1 und 2.2 zusammengesetzt. Denkbare alternative Lagerbauformen sind beispielsweise ein Kegelrollenlager mit X-Anordnung der Rollen, symmetrische oder asymmetrische Kegelrollenlager, oder Axial-Radial-Rollenlager wie beispielsweise eine dreireihige Rollendrehverbindung.

Das Rotorlager 1 ist in Fig. 2 in Einbaulage gezeigt. In der Einbaulage schließt die Drehachse A mit der Horizontalen einen Winkel im Bereich von 2° bis 10° ein. Hierdurch kann der Durchfluss von Schmieröl durch einen den Außenring durchquerenden Kanal begünstigt werden. In Bezug auf die Windenergieanlage 100 ist die tieferliegende Seite des Rotorlagers 1 (in Fig. 2 links dargestellt) bevorzugt auf Seiten der Gondel 120 und die höhergelegene Seite (in Fig. 2 rechts dargestellt) auf Seiten des Rotors 130 angeordnet.

Bei dem dargestellten Ausführungsbeispiel ist der Außenring 3 als Nasenring 9 ausgebildet, an dem zwei Laufbahnen 10 für zwischen den Lagerringen 2, 3 abrollbare Wälzkörperreihen 5 ausgebildet sind. An dem Außenring 3 ist beidseitig jeweils ein Ölfangring 11 drehfest angeschlossen, die sich für die Ausbildung jeweils eines Ölsumpfes 8 randseitig über radial äu-βere Ränder 12 der Laufbahnen 10 hinaus in radialer Richtung R nach innen erstrecken. Dabei bildet der in Fig. 2 links dargestellte Ölfangring 11 den Überlauf 7.

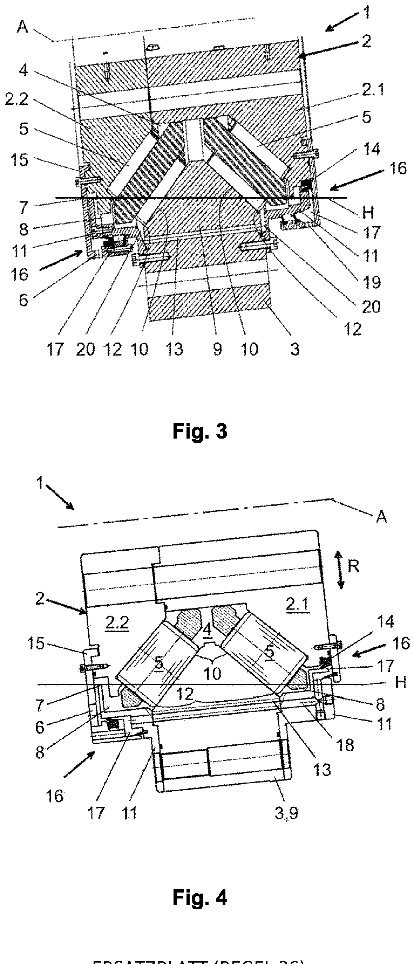

Wie in der in Fig. 3 gezeigten Detaildarstellung des Ausführungsbeispiels gemäß Fig. 2 deutlicher zu erkennen, sind die beiden Ölsümpfe 8 über mehrere den Außenring durchquerende Kanäle 13 verbunden. In Fig. 2 ist zu erkennen, dass diese über den Umfang des Außenrings 3 verteilt angeordnet sind. Nach einem halben Umlauf des Außenrings 3 taucht der in Fig. 2 oben dargestellte Kanal 13 in die Ölsümpfe 8 ein und der in Fig. 2 unten dargestellte Kanal 13 liegt frei. Durch das Vorsehen von Ölfangnuten 20 in den Ölfangringen 11 können die Kanäle 13 in einem ausreichenden Abstand zu den gehärteten Laufbahnen 10 eingebracht werden. Die Kanäle 13 sind vorzugsweise als Durchgangsbohrungen ausgebildet.

Vorzugsweise ist die Anzahl und Verteilung der Kanäle 13 über den Umfang so gewählt, dass unabhängig von der Winkelstellung der Lagerringe 2, 3 zueinander zumindest ein Kanal eine Verbindung der beiden Ölsümpfe 8 bereitstellt. Bei einem Rotorlager, dass als Innenläufer ausgelegt ist, kann demnach bereits ein Kanal 13 ausreichend sein, um die Ölsümpfe 8 im Betrieb zum Ausgleich der Füllhöhen dauerhaft miteinander zu verbinden.

Die Kanäle 13 verlaufen vorzugsweise im Wesentlichen parallel zur Drehachse A des Rotorlagers 1. Alternativ können die Kanäle auch eine Richtungskomponente in Umfangsrichtung des Rotorlagers aufweisen. Durch eine in Abhängigkeit von einer Vorzugs-Umlaufrichtung des Rotorlagers gewählten Richtungskomponente der Kanäle kann eine Pumpwirkung verstärkt werden, da sich die Kanäle nach dem Auftauchen aus den Ölsümpfen bevorzugt in Richtung ihres tiefergelegenen Endes entleeren.

Wie insbesondere in Fig. 3 erkennbar, weist das Rotorlager 1 in dem ersten Ausführungsbeispiel nur einseitig einen Überlauf 7 auf und der Lagerinnenraum 4 ist auf der anderen Seite des Rotorlagers 1 mittels einer Dichtung 14 geschlossen. Dafür kann eine Höhendifferenz zwischen den beiden Ölfangringen 11 vorgesehen sein, die sich aus der Einbaulage des Rotorlagers und/oder durch die konstruktive Auslegung der beiden Ölfangringe 11 ergibt. Die Dichtung 14 dient dazu, die einseitige, drucklose Ölabführung in allen, beispielsweise auch nicht ausgeglichenen, transienten Betriebszuständen oder auch nur kurzzeitig auftretenden Betriebszuständen zu gewährleisten. Hieraus ergibt sich eine unsymmetrische naben- und generatorseitige Dichtungssystemausführung, durch die gewährleistet ist, dass - bis auf geringe Drainage-/Leckagemengen der Dichtung 14 - die zugeführte Ölmenge auf der Generatorseite sicher abgeführt werden kann. Die Dichtung 14 ist in der dargestellten Einbaulage des Rotorlagers 1 oberhalb der durch den Überlauf 7 festgelegten Füllhöhe H der miteinander verbundenen Ölsümpfe 8 angeordnet.

Hinter der Dichtung 14 ist eine durch mindestens eine weitere Dichtung nach außen hin abgeschlossene Drainagekammer 17 angeordnet, die einen weiteren Abfluss 19 aufweist. An den Abfluss 19 kann beispielsweise ein Auffangbehälter angeschlossen werden, der das ausgetretene Leckageöl sammelt. Bei einem Außenläufer wird die Drainagekammer 17 vorzugsweise gebildet durch einen Ringaufsatz, der an dem Innenring 2 befestigt ist, den Ölfangring 11 in radialer Richtung R umgreift und gegenüber diesem abgedichtet ist.

Das Rotorlager 1 weist auf Seiten des Überlaufs 7 ferner einen an dem Innenring 2 befestigten Ringaufsatz 15 auf, der den den Überlauf 7 bildenden Ölfangring 11 in radialer Richtung R umgreift und den Abfluss 6 enthält. Auch der Ringaufsatz 15 ist gegenüber dem Ölfangring 11 unter Ausbildung einer Drainagekammer 17 abgedichtet.

Die Verwendung von Ringaufsätzen als Dichtungsträgerringe ist bezüglich Montage und Tausch der Dichtung auf der Anlage vorteilhaft.

Wie in Fig. 2 und 3 dargestellt ist vorzugsweise der Innenring 2 gegenüber dem Außenring 3 beidseits des Lagers 1 direkt oder indirekt durch jeweils ein Dichtungssystem 16 abgedichtet, das mindestens zwei Dichtungen umfasst, zwischen denen jeweils eine Drainagekammer 17 zum Sammeln von Leckageöl ausgebildet ist.

In **Fig. 4** ist ein zweites Ausführungsbeispiel eines erfindungsgemäßen Rotorlagers 1 dargestellt. Im Unterschied zum ersten Ausführungsbeispiel sind die Drainagekammern 17 der Dichtungssysteme 16 beidseits des Rotorlagers 1 über mindestens einen den Außenring 3 durchquerenden Kanal 18 miteinander verbunden. Der Kanal 18 kann zusätzlich zu und getrennt von einem Kanal 13 vorgesehen sein, der die Ölsümpfe 8 verbindet. Kanal 13 ist in Fig. 4 gestrichelt dargestellt, da er in einer anderen Schnittebene des Rotorlagers 1 angeordnet ist. Analog zu den die Ölsümpfe 8 verbindenden Kanälen 13 sind bei einem Außenläufer auch mehrere über den Umfang des Außenrings verteilt angeordnete Kanäle 18 vorteilhaft.

Das aus den Drainagekammern 17 abgeführte Leckageöl kann gegebenenfalls gereinigt in den Schmierölkreislauf zurückgeführt werden. Alternativ kann das Leckageöl zentral gesammelt und entsorgt werden.

Im Übrigen gelten die Ausführungen zum ersten Ausführungsbeispiel entsprechend.

Gemäß einem nicht dargestellten Ausführungsbeispiel kann auch einer der Überläufe mit dem Abfluss über mindestens einen den Außenring durchquerenden Kanal verbunden sein.

Im Übrigen gelten die Ausführungen zu den ersten beiden Ausführungsbeispielen entsprechend.

### Bezugszeichenliste

- 1: Rotorlager
- 2: Innenring
- 2.1, 2.2: Teilringe
- 3: Außenring
- 4: Lagerinnenraum
- 5: Wälzkörperreihe
- 6: Abfluss
- 7: Überlauf
- 8: Ölsumpf
- 9: Nasenring
- 10: Laufbahn
- 11: Ölfangring
- 12: radial äußerer Rand der Laufbahn
- 13: Kanal
- 14: Dichtung
- 15: Ringaufsatz
- 16: Dichtungssystem
- 17: Drainagekammer
- 18: Kanal
- 19: Abfluss Drainagekammer
- 20: Ölfangnut

- 100: Windenergieanlage
- 110: Turm
- 120: Gondel
- 130: Rotor
- 140: Rotorblatt
- 150: Rotornabe

- R: radiale Richtung
- H: Füllhöhe
- A: Lagerachse

## Patentansprüche

1. Rotorlager für eine Windenergieanlage (100) mit einem Innenring (2) und einem Au-βenring (3), die relativ zueinander verdrehbar sind und einen Lagerinnenraum (4) begrenzen, in dem mindestens eine Reihe von zwischen den Lagerringen abrollbaren Wälzkörpern (5) angeordnet ist, und mit einem Abfluss (6) zur Abführung von aus dem Lagerinnenraum (4) austretendem Schmieröl, wobei der Lagerinnenraum (4) zu dem Abfluss (6) hin offen ausgebildet, so dass Schmieröl aus dem Lagerinnenraum (4) drucklos über den Abfluss (6) abführbar ist und der Lagerinnenraum (4) mit dem Abfluss (6) über mindestens einen an dem Außenring (3) drehfest angeschlossenen Überlauf (7) fluidisch verbunden ist, der in Einbaulage des Rotorlagers (1) eine Füllhöhe (H) mindestens eines im Lagerinnenraum (4) ausgebildeten Ölsumpfes (8) festlegt, wobei an dem Außenring (3) beidseitig jeweils ein Ölfangring (11) drehfest angeschlossen ist, von denen mindestens einer den mindestens einen Überlauf (7) bildet, **dadurch gekennzeichnet, dass** der Außenring (3) als Nasenring (9) ausgebildet ist, an dem mindestens zwei Laufbahnen (10) für zwischen den Lagerringen (2, 3) abrollbare Wälzkörperreihen (5) ausgebildet sind, wobei sich die Ölfangringe (11) für die Ausbildung jeweils eines Ölsumpfes (8) randseitig über radial äußere Ränder (12) der Laufbahnen (10) hinaus in radialer Richtung (R) nach innen erstrecken und an dem Innenring (2) ein Ringaufsatz (15) befestigt ist, der den den Überlauf (7) bildenden Ölfangring (11) in radialer Richtung (R) umgreift und den Abfluss (6) enthält, und der Ringaufsatz (15) gegenüber dem Ölfangring (11) abgedichtet ist.

2. Rotorlager nach Anspruch 1, **dadurch gekennzeichnet, dass** die beiden Ölsümpfe (8) über mindestens einen den Außenring (3) durchquerenden Kanal (13) miteinander verbunden sind.

3. Rotorlager nach Anspruch 1, **dadurch gekennzeichnet, dass** das Rotorlager (1) als Außenläufer ausgelegt ist und eine Mehrzahl von den Außenring (3) durchquerenden Kanälen (13) zur Verbindung der beiden Ölsümpfe (8) über den Umfang des Außenrings (3) verteilt angeordnet sind.

4. Rotorlager nach einem der Ansprüche 2 oder 3, **dadurch gekennzeichnet, dass** das Rotorlager (1) nur einseitig einen Überlauf (7) aufweist und der Lagerinnenraum (4) auf der anderen Seite des Rotorlagers (1) mittels mindestens einer Dichtung (14) geschlossen ist.

5. Rotorlager nach Anspruchs 4, **dadurch gekennzeichnet, dass** die Dichtung (14) in Einbaulage des Rotorlagers (1) oberhalb der durch den Überlauf (7) festgelegten Füllhöhe (H) der miteinander verbundenen Ölsümpfe (8) angeordnet ist.

6. Rotorlager nach einem der Ansprüche 1 bis 5, **dadurch gekennzeichnet, dass** einer der Überläufe mit dem Abfluss über mindestens einen den Außenring durchquerenden Kanal verbunden ist.

7. Rotorlager nach einem der Ansprüche 1 bis 6, **dadurch gekennzeichnet, dass** der Innenring (2) gegenüber dem Außenring (3) beidseits des Lagers (1) direkt oder indirekt durch jeweils ein Dichtungssystem (16) abgedichtet ist, das mindestens zwei Dichtungen umfasst, zwischen denen jeweils eine Drainagekammer (17) zum Sammeln von Leckageöl ausgebildet ist.

8. Rotorlager nach Anspruch 7, **dadurch gekennzeichnet, dass** die Drainagekammern (17) beidseits des Rotorlagers (1) über mindestens einen den Außenring (3) durchquerenden Kanal (18) miteinander verbunden sind.

9. Windenergieanlage mit einem Turm (110), einer an dem Turm (110) befestigten Gondel (120) und einem an der Gondel (120) drehbar gelagerten Rotor (130), **dadurch gekennzeichnet, dass** der Rotor (130) über ein Rotorlager (1) nach einem der Ansprüche 1 bis 8 an der Gondel (120) gelagert ist.

10. Windenergieanlage nach Anspruch 9, wobei der Rotor (130) mit dem Außenring (3) und die Gondel (120) mit dem Innenring (2) drehfest verbunden sind.

11. Windenergieanlage nach Anspruch 9 oder 10, **dadurch gekennzeichnet, dass** die Drehachse (A) des Rotorlagers (1) mit der Horizontalen einen Winkel im Bereich von 2° bis 10° einschließt.

## Claims

1. Rotor bearing for a wind turbine (100) with an inner ring (2) and an outer ring (3), which are rotatable relative to one another and delimit a bearing inner space (4), in which at least one row of rolling bodies (5), which can roll between the bearing rings, is arranged, and with an outlet (6) for discharging of lubricating oil emerging from the bearing inner space (4), the bearing inner space (4) being designed to be open towards the outlet (6), so that the lubricating oil can be discharged at atmospheric pessure from the bearing inner space (4) via the outlet (6), and the bearing interior (4) is in fluid connection to the outlet (6) via at least one overflow (7) connected in a rotationally fixed manner to the outer ring (3), which overflow (7) determines, in the installation position of the rotor bearing (1), a filling height (H) of at least one oil sump (8) formed in the bearing inner space (4), an oil-collecting ring (11) is non-rotatably connected to the outer ring (3) on both sides, at least one of them forming the at least one overflow (7), **characterized in that** the outer ring (3) is designed as a nose ring (9) on which at least two raceways (10) are formed for rows of rolling bodies (5) which can roll between the bearing rings (2, 3), wherein the oil-collecting rings (11) extend inwards in the radial direction (R) beyond the radially outer edges (12) of the raceways (10) to each form an oil sump (8), and wherein an ring attachment (15) is fixed to the inner ring (2), which encompasses, in the radial direction (R), the oil-collecting ring (11) forming the overflow (7) and contains the outflow (6), and wherein the ring attachment (15) is sealed with respect to the oil-collecting ring (11).

2. Rotor bearing according to claim 1, **characterized in that** the two oil sumps (8) are connected by at least one channel (13) running through the outer ring (3).

3. Rotor bearing according to claim 1, **characterized in that** the rotor bearing (1) is designed as an external rotor and that a plurality of channels (13) passing through the outer ring (3) are distributed over the circumference of the outer ring (3) to connect the two oil sumps (8).

4. Rotor bearing according to one of claims 2 or 3, **characterized in that** the rotor bearing (1) has an overflow (7) on one side and the bearing inner space (4) is closed on the other side of the rotor bearing (1) by means of at least one seal (14).

5. Rotor bearing according to claim 4, **characterized in that** the seal (14), in the installation position of the rotor bearing (1), is arranged above the filling height (H) of the connected oil sumps (8), which height is determined by the overflow (7).

6. Rotor bearing according to one of claims 1 to 5, **characterized in that** one of the overflows is connected to the drain by at least one channel passing through the outer ring.

7. Rotor bearing according to one of claims 1 to 6, **characterized in that** the inner ring (2) is sealed with respect to the outer ring (3) directly or indirectly on both sides of the bearing (1) by a respective sealing system (16) which comprises at least two seals, between each of which a respective drainage chamber (17) for collecting leakage oil is formed.

8. Rotor bearing according to claim 7, **characterized in that** the drainage chambers (17) are connected to one another on both sides of the rotor bearing (1) by at least one channel (18) running through the outer ring (3).

9. A wind turbine comprising a tower (110), a nacelle (120) attached to the tower (110) and a rotor (130) rotatably mounted on the nacelle (120), **characterized in that** the rotor (130) is mounted on the nacelle (120) via a rotor bearing (1) according to one of claims 1 to 8.

10. Wind turbine according to claim 9, in which the rotor (130) is rotationally fixed to the outer ring (3) and the nacelle (120) is rotationally fixed to the inner ring (2).

11. Wind turbine according to claim 9 or 10, **characterized in that** the axis of rotation (A) of the rotor bearing (1) forms an angle with the horizontal in the range 2° to 10°.

## Revendications

1. Palier de rotor pour une éolienne (100) avec une bague intérieure (2) et une bague extérieure (3) qui peuvent tourner l'une par rapport à l'autre et qui délimitent un espace intérieur de palier (4) dans lequel est disposée au moins une rangée de corps roulant (5) pouvant rouler entre les bagues de palier, et avec un écoulement (6) pour l'évacuation de l'huile de lubrification sortant de l'espace intérieur de palier (4), l'espace intérieur de palier (4) étant réalisé ouvert vers l'écoulement (6), de sorte que l'huile de lubrification peut être évacuée sans pression de l'espace intérieur de palier (4) par l'intermédiaire de l'écoulement (6) et que l'espace intérieur de palier (4) est relié fluidiquement à l'écoulement (6) par l'intermédiaire d'au moins un trop-plein (7) raccordé de manière solidaire en rotation à la bague extérieure (3), qui détermine, dans la position de montage du palier de rotor (1), une hauteur de remplissage (H) d'au moins un carter d'huile (8) formé dans l'espace intérieur de palier (4), une bague collectrices d'huile (11) étant raccordée de manière solidaire en rotation à la bague extérieure (3) des deux côtés, au moins l'une d'entre elles formant au moins un trop-plein (7), **caractérisé en ce que** la bague extérieure (3) est réalisée sous la forme d'une bague de nez (9) sur laquelle sont réalisées au moins deux pistes de roulement (10) pour des rangées de corps roulants (5) pouvant rouler entre les bagues de palier (2, 3), les bagues collectrices d'huile (11) pour la formation d'un carter d'huile (8) s'étendant du côté du bord vers l'intérieur dans la direction radiale (R) au-delà des bords radialement extérieurs (12) des pistes de roulement (10), et une garniture annulaire (15) étant fixée sur la bague intérieure (2), laquelle entoure dans la direction radiale (R) la bague collectrice d'huile (11) formant le trop-plein (7) et contient l'écoulement (6), et la garniture annulaire (15) étant rendue étanche par rapport à la bague collectrice d'huile (11).

2. Palier de rotor selon la revendication 1, **caractérisé en ce que** les deux carters d'huile (8) sont reliés entre eux par au moins un canal (13) traversant la bague extérieure (3).

3. Palier de rotor selon la revendication 1, **caractérisé en ce que** le palier de rotor (1) est conçu comme un rotor extérieur et qu'une pluralité de canaux (13) traversant la bague extérieure (3) sont répartis sur la périphérie de la bague extérieure (3) pour relier les deux carters d'huile (8).

4. Palier de rotor selon l'une des revendications 2 ou 3, **caractérisé en ce que** le palier de rotor (1) présente un trop-plein (7) d'un seul côté et que l'espace intérieur du palier (4) est fermé de l'autre côté du palier de rotor (1) au moyen d'au moins un joint d'étanchéité (14).

5. Palier de rotor selon la revendication 4, **caractérisé en ce que** le joint (14) est disposé, dans la position de montage du palier de rotor (1), au-dessus de la hauteur de remplissage (H), fixée par le trop-plein (7), des carters d'huile (8) reliés entre eux.

6. Palier de rotor selon l'une des revendications 1 à 5, **caractérisé en ce qu'**un des troppleins est relié à l'évacuation par au moins un canal traversant la bague extérieure.

7. Palier de rotor selon l'une des revendications 1 à 6, **caractérisé en ce que** la bague intérieure (2) est rendue étanche par rapport à la bague extérieure (3), directement ou indirectement, de part et d'autre du palier (1), par respectivement un système d'étanchéité (16) qui comprend au moins deux joints entre lesquels est formée respectivement une chambre de drainage (17) pour recueillir l'huile de fuite.

8. Palier de rotor selon la revendication 7, **caractérisé en ce que** les chambres de drainage (17) sont reliées entre elles de part et d'autre du palier de rotor (1) par au moins un canal (18) traversant la bague extérieure (3).

9. Éolienne comprenant une tour (110), une nacelle (120) fixée à la tour (110) et un rotor (130) monté à rotation sur la nacelle (120), **caractérisée en ce que** le rotor (130) est monté sur la nacelle (120) par l'intermédiaire d'un palier de rotor (1) selon l'une des revendications 1 à 8.

10. Éolienne selon la revendication 9, dans laquelle le rotor (130) est solidaire en rotation de la bague extérieure (3) et la nacelle (120) de la bague intérieure (2).

11. Éolienne selon la revendication 9 ou 10, **caractérisée en ce que** l'axe de rotation (A) du palier de rotor (1) forme avec l'horizontale un angle compris dans la plage de 2° à 10°.
